# EUROPÄISCHE PATENTSCHRIFT

(11) **EP 0 579 191 B1**
(45) Veröffentlichungstag und Bekanntmachung des Hinweises auf die Patenterteilung: **08.01.1997**
(21) Anmeldenummer: 93111246.0
(22) Anmeldetag: 13.07.1993
(51) Int. Cl.: B62B 17/02, B62B 13/04

(54) **An den Boden und die Fähigkeiten des Benutzers anpassbarer Schlitten**
Sledge adaptable to the surface and the skills of the user
Traineau adaptable aux surfaces et à l'adresse de l'utilisateur

(30) Priorität: 14.07.1992 DE 4223114
(43) Veröffentlichungstag der Anmeldung: 19.01.1994
(73) Patentinhaber: Gutmann, Luise, D-71522 Backnang-Heiningen (DE); Gutmann, Josef, I-39050 Jenesien (IT)
(72) Erfinder: Gutmann, Josef, I-39050 Jenesien (IT)

(56) Entgegenhaltungen:
- WO-A-89/09154
- DE-C- 392 395
- DE-U- 8 100 445
- FR-A- 2 358 308
- US-A- 4 591 174

## Beschreibung

Die Erfindung betrifft ein Sportgerät zum einkufigen Gleiten oder Rollen auf unterschiedlichem Untergrund, insbesondere auf abschüssigen Pisten, gemäß dem Oberbegriff des Patentanspruchs 1.

Ein derartiges Sportgerät ist beispielsweise aus der DE-OS 3633 773 bekannt. Der Vorzug dieser Sportgeräte liegt in erster Linie im sehr einfachen Aufbau begründet. Beispielsweise ist der an der oberen Schmalseite des Grundkörpers des Sportgeräts befestigte Sitz mit Haltegriffen für Transportzwecke lösbar. Zum Trimmen des Geräts kann er zudem in Längsrichtung versetzt werden.

Das Sportgerät ist in seiner ursprünglichen Form seit mehreren Generationen im Gardatal (Südtirol/Italien) unter dem Namen "bataròz" bekannt (vgl. Etymologisches Wörterbuch des Dolomitenladinischen von Johannes Kramer, Band I, A-B, Helmut Buske Verlag, Hamburg 1988, Seite 247 sowie Romanica Aenipontana XIV, Akten der Theodor Gartner-Tagung (Rätoromanisch und Rumänisch) in Vill/Innsbruck 1985, herausgegeben von G.A. Plangg und M. Iliescu, Institut für Romanistik der Leopold-Franzens-Universität Innsbruck, Seite 214). Wegen der einfachen Bauweise konnte es von fast jedermann gebaut und genutzt werden.

Um das aus der DE-OS 3633 773 bekannte Sportgerät vielseitiger verwenden zu können, sind Zusatzteile in Form von Skikufen, Wasserskikufen, Rollbrett-Rollen vorgesehen, die an der normalen Gleitkufe an der unteren Schmalseite des rahmenförmig ausgebildeten Grundkörpers befestigt werden können.

Nachteilig ist dabei, daß man die Zusatzteile wegen ihrer sperrigen Abmessungen schlecht während der Ausübung des Sports mit sich führen kann, so daß bei wechselnden Pistenverhältnissen oder bei Fahren mit unterschiedlichem Können ein schneller Wechsel der Kufe nicht möglich ist.

Der Erfindung liegt deshalb die Aufgabe zugrunde, das Sportgerät der eingangs beschriebenen Art derart weiterzubilden, daß unter Beibehaltung des einfachen Aufbaus, der einen leichten Transport ermöglicht, sowohl Anfänger als auch Fortgeschrittene und sehr sportliche Fahrer die Möglichkeiten des Geräts voll ausschöpfen können und auch eine schnelle Anpassung der Kufen bei wechselnden Pisten- verhältnissen ermöglicht wird. Diese Aufgabe wird bei einem gattungsgemäßen Sportgerät durch die kennzeichnenden Merkmale des Patentanspruchs 1 gelöst. Vorteilhafte Ausgestaltungen der Erfindung sind in den Unteransprüchen angegeben.

Erfingdungsgemäß wird die Form des Grundkörpers in vorteilhafter Weise dazu herangezogen, platzsparend und verliersicher einen Satz verschieden gestalteter Kufen, wie z. B. Gleitkufen, Rollen und dergleichen, zu tragen, und zwar über die obere und die untere Schmalseite des Grundkörpers. Mit anderen Worten, es wurde erkannt, daß der Grundkörper eine besonders vorteilhafte Gestalt für das Anbringen einer zusätzlichen, unterschiedlich gestalteten Kufe an der oberen Schmalseite hat. Damit wird dem Benutzer des Sportgeräts eine Ausstattung an die Hand gegeben, die ihn von den Anfängen des Sports bei einfachem Gelände bis zum fortgeschrittenen Fahren unter extremen Bedingungen begleiten kann. Der Fahrer kann sich damit an seine Leisungs- und Fahrgrenze mit einer einzigen Grundausstattung herantasten, so daß auch Anfänger von Beginn an ein sportliches Erlebnis erfahren. Zudem kann das Sportgerät schnell an unterschiedliche Pistenverhältnisse angepaßt werden. Dabei umfaßt diese Ausstattung mit den erweiterten Möglichkeiten des Einsatzes für das Sportgerät nach wie vor ein Minimum an Bauteilen. Denn der Grundkörper bleibt auch bei unterschiedlicher Bestückung mit den verschieden gestalteten Auflagerkörperanordnungen stets ein und derselbe. Zum Wechseln der Kufen ist es vorteilhaft, wenn nach Anspruch 2 die Kufen der unteren und oberen Schmalseite des Grundkörpers gegeneinander austauschbar sind. Die Fahreigenschaften des Sportgeräts können allerdings noch zeitsparender geändert und damit an die gerade vorherrschenden Pistenverhältnisse angepaßt werden, wenn gemäß der Weiterbildung nach Anspruch 3 der an seiner oberen und unteren Schmalseite mit unterschiedlichen Kufen versehene Grundkörper als Wendekörper ausgebildet ist. In diesem Fall muß lediglich der Sitz mit den Haltegriffen lösbar am Grundkörper befestigt sein, damit er nach dem Wenden des Grundkörpers an der dann oberen Seite befestigbar ist.

Die Weiterbildung nach Anspruch 4 erlaubt es, den Grundkörper ohne Lösen des Sitzes zu wenden und damit die Zeit zum Umrüsten des Sportgeräts noch weiter zu reduzieren. In diesem Fall ist es lediglich erforderlich, die Arretiervorrichtung des Grundkörpers an dem diesen in Längsrichtung übergreifenden u-förmigen Bügel zu lösen, dann die Verschwenkung um die Längsachse auszuführen und erneut den Grundkörper am Bügel zu verriegeln. Diese Handgriffe sind innerhalb von wenigen Sekunden ausführbar, und zwar selbst dann, wenn das Sportgerät beim Betreiben bei tiefen Temperaturen mit Schnee und Eis überzogen sein sollte.

Der Transport des Sportgeräts kann dadurch noch vereinfacht werden, wenn gemäß Anspruch 11 der Sitz bei allen Ausführungsformen lösbar mit dem Grundkörper oder dem den Grundkörper in Längsrichtung übergreifenden u-förmigen Bügel verbunden ist. Das erfindungsgemäße Sportgerät läßt sich damit auch als platzsparendes Baukastensystem, beispielsweise in einem flachen Koffer, zum einen verkaufen und zum anderen transportieren.

Über den abnehmbaren Sitz läßt sich darüber hinaus auch in vorteilhafter Weise das Fahrverhalten des Geräts beeinflussen, wenn der Sitz gemäß Anspruch 12 außerdem in Längsrichtung versetzbar ist.

Die Weiterbildung nach Anspruch 16 hat den Vorteil, daß der für die Sitzbefestigung herangezogene Bügel gleichzeitig als federndes Element zur Abschwächung der ansonsten voll auf die Wirbelsäule übertragenden Stoßkräfte dienen kann.

Es hat sich herausgestellt, daß über die Verjüngung der Gleitkufe nach Anspruch 8 zum Heck des Sportgeräts hin auf dessen Fahrverhalten besonders wirksam Einfluß genommen werden kann.

Nachstehend werden anhand schematischer Zeichnungen mehrere Ausführungsbeispiele der Erfingung erläutert. Es zeigen:
- Fig. 1: eine perspektivische Ansicht des Sportgeräts zur Erläuterung der Fahrposition des Sportlers;
- Fig. 2: eine perspektivische Ansicht einer ersten Ausführungsform des Sportgeräts mit einem als Wendekörper ausgebildeten Grundkörper;
- Fig. 3: die Ansicht des Sportgeräts gemäß Fig. 2 von hinten;
- Fig. 4: eine Explosionsdarstellung der Einzelteile der Ausführungsform gemäß Fig. 2 und 3;
- Fig. 5: eine Explosionsdarstellung einer anderen Ausführungsform des Sportgeräts mit Wendekörper;
- Fig. 6: eine gegenüber Fig. 5 abgewandelte Befestigung des Sitzes;
- Fig. 7: eine perspektivische Ansicht einer Ausführungsform des Sportgeräts mit gegeneinander austauschbaren Kufen;
- Fig. 8: einen schematischen Vertikalschnitt des Sportgeräts nach Fig. 7 im vorderen Bereich;
- Fig. 9: eine perspektivische Ansicht einer Ausführungsform des Sportgeräts mit Wendekörper entsprechend Fig. 5, jedoch mit Überzug-Schuh auf der unteren Kufe;
- Fig. 10: eine Frontansicht mit einer lösbaren Sitzbefestigung bei einer Ausführungsform des Sportgeräts mit Wendekörper;
- Fig. 11: eine Seitenansicht der Ausführungsform des Sportgeräts nach Fig. 10 mit einer etwas abgewandelten Sitzbefestigung;
- Fig. 12: eine Frontansicht einer Ausführungsform des Sportgeräts mit gegeneinander austauschbaren Kufen entsprechend Fig. 7 und 8, jedoch mit einer weiteren Kufe;
- Fig. 13: eine Seitenansicht einer Ausführungsform des Sportgeräts mit gegeneinander austauschbaren Kufen sowie einer besonderen Kufenausbildung für Tiefschnee;
- Fig. 14: eine schematische perspektivische Ansicht einer Ausführungsform des Sportgeräts mit Wendekörper und gegeneinander austauschbaren Kufen sowie einer Rollenanordnung auf einer Kufe zum Befahren von Betonpisten; und
- Fig. 15: einen schematischen Vertikal-Halbschnitt des Sportgeräts gemäß Fig. 14 im vorderen Bereich.

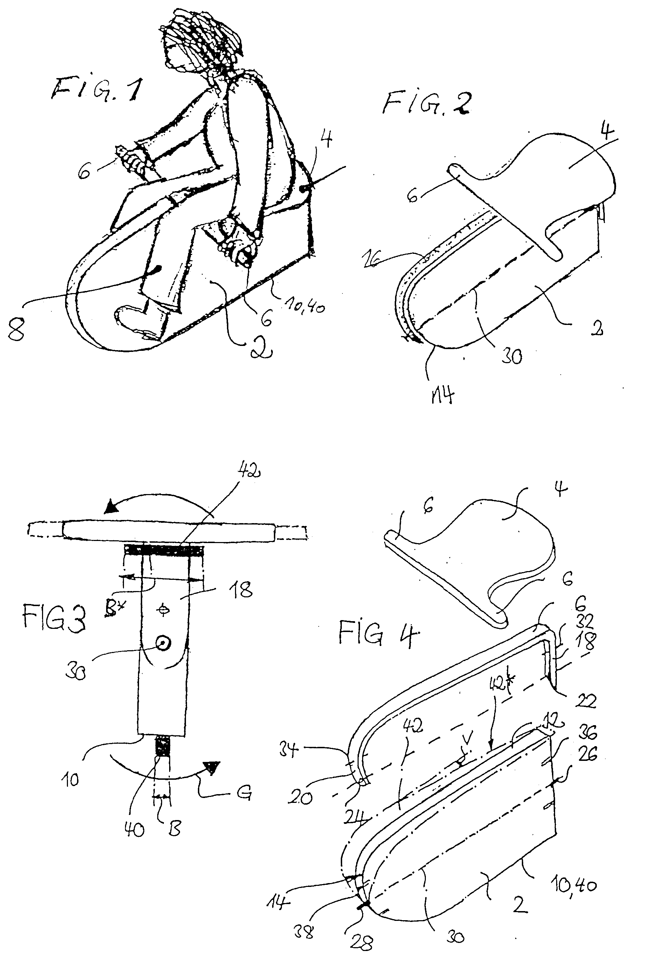

Das in Figur 1 gezeigte Sportgerät dient zum Fahren auf abschüssigen Pisten, beispielsweise auf Schnee-, Sand-, Beton- und Graspisten. Das Gerät besteht im wesentlichen aus drei Teilen, nämlich einem im wesentlichen ebenen und stehenden, beispielsweise als Trägerrahmen ausgebildeten Grundkörper 2, der sich mit seiner bodenseitigen Schmalseite 10 über eine Kufe 40 an der Piste abstützt, einem Sitz 4 und zwei Haltegriffen 6 zum Halten und Lenken, die einstückig mit dem Sitz 4 verbunden sein können. Betrieben wird das Sportgerät derart, daß die Beine 8 über die Haltegriffe 6 gelegt werden und letztere seitlich neben den Oberschenkeln erfaßt werden. Die Abmessungen des Sportgeräts sind so, daß die Füße des Sportlers bei Fahrt gewöhnlicherweise den Untergrund nicht berühren. Gelenkt wird das Sportgerät allein durch Verlagerung des Schwerpunktes und damit einhergehend durch die Kurvenlage des Trägerrahmens, der dann eine entsprechende engere oder weitere Kurve fährt.

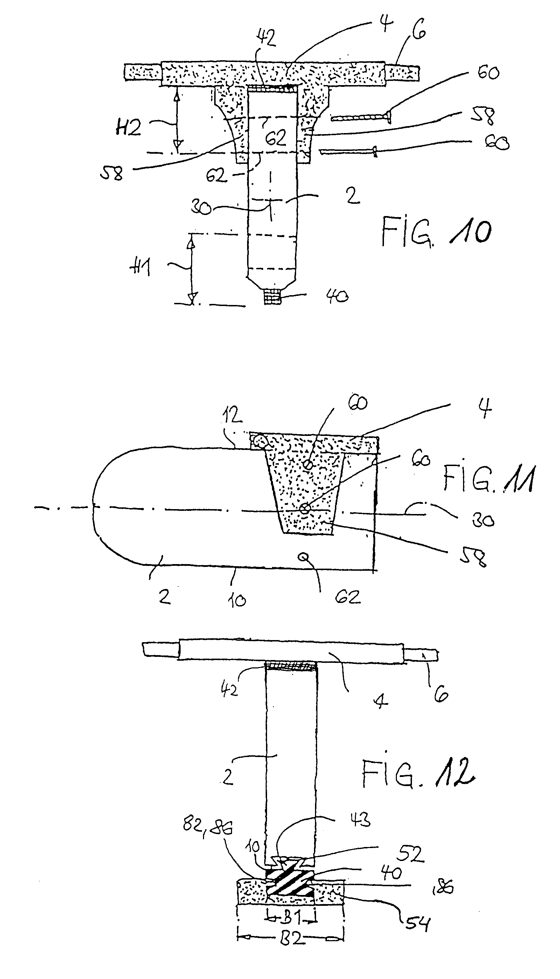

In den Figuren 2 bis 15 sind verschiedene Ausführungsformen und Einzelheiten des Sportgeräts gezeigt. Dabei ist allen Ausführungsformen gemeinsam, daß dem betreffenden Grundkörper zum Einsatz des Sportgeräts in unterschiedlichem Gelände, wie z. B. auf Pisten mit unterschiedlicher Oberflächen- bzw. Schneebeschaffenheit, bzw. zur Anpassung an das individuelle Fahrvermögen des Benutzers ein Satz verschieden gestalteter Kufen zugeordnet ist, die jeweils von den horizontal liegenden Schmalseiten 10, 12 des Grundkörpers 2 getragen sind.

Der Grundkörper hat die Form eines flachen Quaders, der in Längsrichtung ausgerichtet ist, wobei seine Schmalseiten 10, 12 am vorderen Ende durche eine Rundung 14 verbunden sind.

Der Grundkörper 2 besteht beispielsweise aus Holz oder Kunststoff oder einem entsprechenden Verbundwerkstoff, wie er im Sportartikelbereich häufig verwendet wird. Es können allerdings auch andere Materialien, insbesondere auch Verbundmaterialien unter Einbeziehung von Leichtbaustoffen, wie z. B. Aluminium, Verwendung finden.

Beim Ausführungsbeispiel nach Fig. 2 bis 4 ist ein u-förmiger Bügel 16 vorgesehen, der den Grundkörper 2 in Längsrichtung zur Hälfte umschließt und im Bereich seiner hinteren und vorderen Schenkel 18, 20 jeweils eine Bohrung 22, 24 zur Aufnahme eines Schwenkzapfens 26, 28 aufweist, die am Grundkörper 2 in Richtung einer horizontalen Längsachse 30 angebracht sind. Diese Längsachse 30 verläuft durch die horizontale Symmetrieebene des Grundkörpers 2. Im eingesetzten Zustand des Grundkörpers 2 befinden sich die Schwenkbolzen 26, 28 mit den Bohrungen 22, 24 im Bügel 16 in Eingriff. Zur Arretierung des Grundkörpers 2 am Bügel 16 sind Arretierstifte 32, 34 vorgesehen, die in entsprechende Ausnehmungen 36, 38 an den vorderen und hinteren Schmalseiten des Grundkörpers 2 eingreifen. Selbstverständlich kann die Anordnung auch umgekehrt werden. Die Arretiervorrichtung 32, 36; 34, 38 zwischen Bügel 16 und Grundkörper 2 kann auch von einer Schnappverbindung gebildet sein. Der u-förmige Bügel 16 trägt oberseitig den Sitz 4 mit den Haltegriffen 6. Der so durch den u-förmigen Bügel 16 als Wendekörper ausgebildete Grundkörper trägt an seiner unteren Schmalseite 10 eine schmale Kufe 40, während die obere Schmalseite 12 eine verhältnismäßig breite Kufe 42 trägt. Die Breite B der unteren Kufe 40 liegt beispiels-weise bei etwa 60 bis 100 mm, während die Breite B* der oberen Kufe 42 ein Mehrfaches der Breite B betragen kann.

Das Sportgerät wird von einem geübten Sportler bei hartem Untergrund, wie z. B. einer Harschpiste oder einer Rodelbahn so betrieben, daß es sich über die schmale Kufe 40 abstützt. Es können dann mit diesem Sportgerät sehr hohe Geschwindigkeiten erreicht werden, wobei nach wie vor eine hohe Wendigkeit und eine gute Griffigkeit gewährleistet sind. Wenn die Piste weicher und tiefer wird, kann das Sportgerät durch einfache Handgriffe auf die breitere Kufe 42 umgerüstet werden. In diesem Fall sind lediglich die Arretiervorrichtungen 32, 36; 34, 38 kurzzeitig zu befestigen, so daß der Grundkörper 2 um die horizontale Längsachse 30 entsprechend dem Pfeil G in Fig. 3 geschwenkt werden kann. Nach einer 180 Grad Verschwenkbewegung wird der Grundkörper 2 wieder am Bügel 16 arretiert. Es befindet sich dann die breitere Kufe 42 unten, so daß auch im Tiefschnee oder im Firn gefahren werden kann.

In Fig. 4 ist mit strichpunktierten Linien die breitere Kufe 42 angedeutet. Man erkennt aus dieser Darstellung, daß sich die Gleitkufe auf der Vorderseite an die vordere Rundung 14 des Grundkörpers 2 anschmiegt. Darüber hinaus ist zu erkennen, daß sich die Kufe 42 zum Heck des Sportgeräts hin immer mehr verjüngt. Es konnte festgestellt werden, daß durch den Verjüngungswinkel V gezielt Einfluß auf das Kurvenfahrverhalten des Sportgeräts genommen werden kann. Je größer der Winkel V ist, desto leichter lassen sich Kurven auch bei kleineren Geschwindigkeiten fahren, wobei darüber hinaus auch die Bremskraft mit größer werdenem Winkel V zunimmt. Durch das Bestücken des Grundkörpers 2 mit unterschiedlichen Kufen, so auch mit Gleitkufen unterschiedlichen Verjüngungsgrades, kann das Sportgerät den Sportler von Beginn seiner Beschäftigung mit dem Sportgerät an bis zur Perfektion begleiten. Es ist dabei lediglich ein einziger Grundkörper erforderlich.

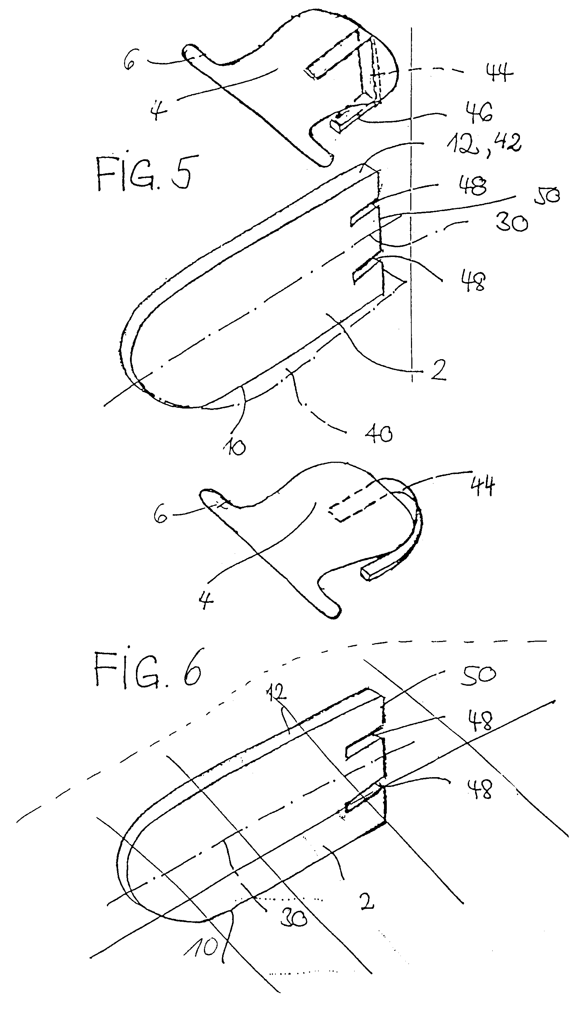

Fig. 5 zeigt eine weitere Ausführungsform des Sportgeräts in einer etwas vereinfachten Ausführung des Grundkörpers 2 als Wendekörper. Hierbei besteht der Grundkörper 2 lediglich aus einem Teil. Die obere Schmalseite 12 des Grundkörpers 2 bildet dabei selbst die Kufe 42, während auf die untere Schmalseite 10 eine strichpunktiert angedeutete Kufe 40, beispielsweise lösbar aufgesetzt ist. Mit 30 ist wieder die horizontale, mit der Symmetrieachse des plattenförmigen Grundkörpers 2 zusammenfallende Längsachse angedeutet, um die der Grundkörper 2 gewendet wird.

Der Sitz 4 ist lösbar mit dem Grundkörper 2 verbunden. Zu diesem Zweck ist an der Unterseite des Sitzes 4 ein u-förmiger Bügel 44 befestigt, der mit einem Schenkel 46 in eine Ausnehmung 48 an der hinteren Schmalseite 50 einsetzbar und dort verriegelbar ist. Zur Ausnehmung 48 ist spiegelbildlich eine gleichartige Ausnehmung 48 vorgesehen, so daß der Grundkörper 2 wiederum als Wendekörper fungieren kann, um die Fahreigenschaften des Sportgeräts zu verändern. In diesem Fall ist lediglich der Sitz 4 abzunehmen, der Grundkörper 2 um die horizontale Längsachse 30 um 180 Grad zu drehen und der Sitz 4 in die dann oben befindliche Ausnehmung 48 einzusetzen.

Fig. 6 zeigt eine gegenüber der Fig. 5 abgewandelte Befestigung des Sitzes 4. In diesem Fall ist der u-förmige Bügel 44 an der Unterseite des Sitzes 4 federnd und aus Metall ausgebildet. Diese Metallfeder wirkt als Einrichtung zur Dämpfung von Stößen, die über die Kufe 40 von der Piste auf den Grundkörper 2 übertragen werden.

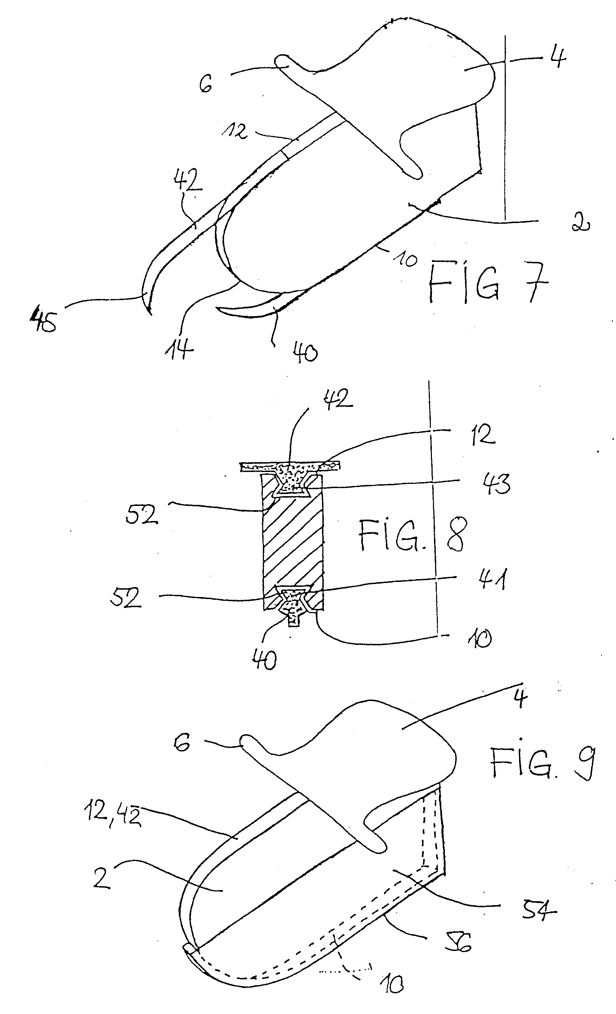

Bei der Ausführungsform gemäß Fig. 7 und 8 ist der Grundkörper 2 nicht als Wendekörper ausgebildet, sondern er ist an seinen Schmalseiten 10, 12 mit Einrichtungen zur lösbaren Aufnahme der Kufen 40, 42 ausgestattet.

Zu diesem Zweck ist in die Schmalseiten 10, 12 eine Längsnut 52 mit Schwalbenschwanzprofil eingearbeitet, in die identische und dem Schwalbenschwanzprofil entsprechende Befestigungsleisten 41, 43 der Kufen 40, 42 formschlüssig eingreifen. Die vorderen Enden der Kufen 40, 42 sind mit gebogenen Spitzen 45 ausgebildet, wodurch im vollkommen eingeschobenen Zustand ein Anschlag gegen die Rundung 14 des Grundkörpers 2 sichergestellt ist. Die Kufen 40, 42 sind dadurch verliersicher am Grundkörper 2 gehalten. Die austauschbaren Kufen können zusätzlich durch Rasteinrichtungen in Lage gehalten werden, wodurch die Betriebssicherheit des Geräts weiter verbessert werden kann.

Mit 4 ist ein Sitz bezeichnet, der die obere Schmalseite 12 rittlings übergreift und zwar derart, daß auch die breitere Kufe 42 in die schwalbenschwanzförmige Längsnut 52 in der oberen Schmalseite 12 des Grundkörpers 2 eingeführt werden kann.

Wenn das Sportgerät aufgrund sich ändernder Pistenbedingungen oder aber auch beim Fahren durch einen weniger geübten Fahrer umgerüstet werden soll, wird die Kufe 40 aus der bodenseitigen Längsnut 52 herausgezogen und durch die obere Kufe 42 ersetzt. Die ausgewechselte Kufe 40 wird dann in die oberseitige Längsnut 52 eingesetzt, woraufhin das Sportgerät wieder fahrbereit ist.

Der Grundkörper 2 bei der Ausführungsform nach Fig. 11 ist als Wendekörper - entsprechend den Ausführungsformen nach den Figuren 5 und 6 - ausgebildet und zu diesem Zweck lösbar mit dem Sitz 4 verbunden. Die obere Schmalseite 12 ist mit einer Kufe 42 bestückt bzw. bestückbar. Die untere Schmalseite 10 kann eine von der Gestaltung der oberen Schmalseite 12 unterschiedliche Formgebung, d. h. Breite und Profilierung haben, so daß durch Wenden des Grundkörpers 2 unterschiedliche Fahreigenschaften des Sportgeräts erzielbar sind. Zusätzlich ist für den Grundkörper 2 eine weitere Kufe 54 in der Art eines Überzug-Schuhs vorgesehen, die bei Bedarf über die gerade bodenseitige Schmalseite mit oder ohne aufgesetzter Kufe gestülpt werden kann. Der Überzug-Schuh hat seinerseits wieder eine Gleitfläche 56, mit der dann das Fahrverhalten des Sportgeräts zusätzlich beeinflußt werden kann. Der Überzug-Schuh kann sehr dünnwandig ausgeführt werden und beispielsweise lediglich dazu herangezogen werden, den Verlauf der Seitenkanten der Gleitkufen geringfügig zu korrigieren, um die Drehfreudigkeit des Sportgeräts zusätzlich zu beeinflussen. die Anordnung kann beispielsweise so getroffen sein, daß der Überzug-Schuh nach dem Abnehmen vom Grundkörper 2 auf ein kleines Volumen zusammengerollt werden kann, das dann in einem hier nicht näher dargestellten Stauraum im Grundkörper 2 untergebracht ist.

In Fig. 11 ist ein Schnitt durch eine Ausführungsform des Sportgeräts mit Wendekörper gezeigt, um die Befestigung eines Sitzes 4 am Grundkörper 2 zu veranschaulichen. Der Sitz 4 übergreift den Querschnitt des Grundkörpers 2 ritt-lings derart, daß die Kufe 42 bzw. nach dem Wenden um die Längsachse 30 die Kufe 40 zwischen den Wangen 58 aufgenommen wird. Die Befestigung erfolgt mittels eines Paars von Schrauben 60 oder Bolzen, die durch fluchtende Durchbrüche 62 im Grundkörper 2 verlaufen und mit Gewindebohrungen in der gegenüberliegenden Wange 58 in Eingriff stehen. Zum Umrüsten des Sportgeräts sind deshalb lediglich zwei Schrauben 60 zu lösen und nach dem Wenden des Grundkörpers 2 um 180 Grad und nach dem erneuten Einsetzen zwischen die Wangen 58 wieder festzuziehen. Das hierzu erforderliche Werkzeug kann beispielsweise in einer Ausnehmung oder einem Hohlraum des Grundkörpers 2 verstaut werden. Damit die Verbindung zwischen Sitz 4 und Grundkörper 2 nach dem Wenden desselben gleichermaßen stabil wie vor dem Wenden ausfällt, ist das Maß H1 zwischen der Unterkante der Kufe 40 und der Achse des Durchbruchs 62 genauso groß gehalten wie das Maß H2.

Bei der Ausführungsform gemäß Fig. 11 ist die Wange 58 des Sitzes 4 über die Längsachse 30 hinaus verlängert. Im Grundkörper 2 sind drei Durchbrüche 62 vorgesehen, wobei je nach dem Wendezustand des Grundkörpers 2 neben dem mittleren Durchbruch entweder der obere oder der untere zur Aufnahme der Befestigungschrauben 60 dienen.

Die Ausführungsform gemäß Fig. 12 entspricht weitgehend der Ausführungsform der Figuren 7 und 8. Auch hier trägt der im Querschnitt rechteckförmige Grundkörper 2 über eine Schwalbenschwanzverbindung 43, 52 eine Kufe 40 in Form einer Gleitkufe mit einer Kufenbreite B1.

Um die Fahreigenschaft des Sportgeräts zu beeinflussen, dient die Kufe 40 mit der Breite B1 ihrerseits als Träger für eine weitere, als Gleitkufe ausgebildete Kufe 54. Zu diesem Zweck ist die Kufe 40 mit seitlichen Führungsnuten 86 ausgestattet, in die Vorsprünge 82 der weiteren Kufe 54 formschlüssig eingreifen, die eine Breite B2 hat.

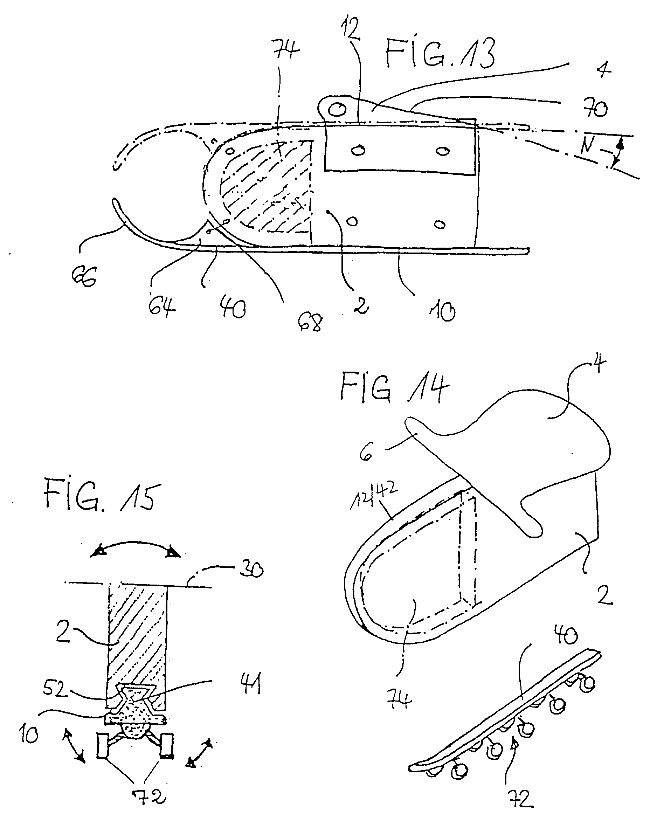

Fig. 13 zeigt eine andere Ausgestaltung des Sportgeräts, wobei in diesem Fall der Grundkörper 2 mit einer Kufe 40 in Form einer Gleitkufe ausgestattet ist, die sich insbesondere für das Fahren in Tiefschnee eignet. die Kufe 40 ist breiter und länger als die vorstehend beschriebenen Gleitkufen ausgebildet. Über einen dreieckförmigen Stützkörper 64 wird die Schaufel 66 der Kufe 40 stabilisiert, wobei mit 68 ein geeignetes Verbindungsmittel zur Ankopplung an den Grundkörper 2 angedeutet ist. Die Kufe 40 ist beispielsweise lösbar mittels einer Längsführung an der unteren Schmalseite 10 des Grundkörpers 2 befestigt. Nach dem Abnehmen der Tiefschnee-Gleitkufe kann die untere Schmalseite 10 selbst wiederum als Gleitkufe für andere Pistenverhältnisse dienen. Die als Tiefschnee-Gleitkufe ausgebildete Kufe 40 kann dann - wie mit strichpunktierten Linien angedeutet - an der oberen Schmalseite 12 des Grundkörpers 2 fixiert werden.

Eine weitere Besonderheit der Ausführungsform gemäß Fig. 13 besteht in der Gestaltung des Sitzes 4, dessen Sitzfläche 70 unter einem Winkel N zur Horizontalen nach hinten abfällt. Es hat sich gezeigt, daß mit dieser Gestaltung der Sitzfläche ein besonders gutes Fahrgefühl und eine bessere Steuerbarkeit des Sportgeräts erzielbar sind.

Die Ausführungsform gemäß Fig. 14 und 15 unterscheidet sich von den zuvor beschriebenen Varianten dadurch, daß sie auch zum Fahren auf Betonpisten geeignet ist. Zu diesem Zweck trägt die als Schiene ausgebildete Kufe 40 bodenseitig eine Rollenanordnung 72. Die Kufe 40 hat eine Befestigungsleiste 41, die formschlüssig in eine schwalbenschwanzförmige Längsnut der unteren Schmalseite 10 des schmalen, quaderförmigen Grundkörpers 2 eingreift. Von diesem Grundkörper 2 ist in Fig. 15 lediglich eine Hälfte dargestellt, da er symmetrisch zu der Längsachse 30 ausgeführt ist. Oberseitig ist eine weitere schwalbenschwanzförmige Längsführung 52 zur Aufnahme einer anderen Kufe ausgebildet. Auf diese Weise ist es möglich, die Kufe 40 mit der Rollenanordnung 72 gegen eine andere Kufe auszutauschen, oder aber den Grundkörper 2 - wie durch den Doppelpfeil angedeutet - um 180 Grad zu wenden und den Sitz 4 erneut am Grundkörper 2 zu befestigen, wodurch mit ein und denselben Bauelementen ein Sportgerät für ein ganz anderes Gelände geschaffen wird. Die Rollenanordnung kann beispielsweise so ausgeführt sein, daß durch Gewichtsverlagerung ein Eigenlenkverhalten sichergestellt ist, wie es z. B. bei Roll- und Wippbrettern der Fall ist.

Allen vorstehend beschriebenen Ausführungsformen ist gemeinsam, daß der gesamte vordere Bereich, d. h. der Bereich vor dem Sitz des Sportgeräts verhältnismäßig wenig belastet ist. Aus diesem Grunde kann dieser Bereich, der in Fig. 13 schraffiert wiedergegeben ist, als Stauraum 74 genutzt werden. Dieser Stauraum 74 ist in Fig. 14 mit strichpunktierten Linien angedeutet und kann beispiesweise als einsetzbare Kassette ausgebildet sein. In dieser Kassette können dann neben Wertsachen auch Werkzug für die Montage und Demontage der einzelnen Komponenten des Sportgeräts aufgenommen werden.

Vorstehend wurden abschüssige Pisten als Einsatzgebiete für das Sportgerät erwähnt. Es versteht sich jedoch, daß sich das Sportgerät gleichermaßen als Wassersportgerät eignet, wenn eine als Wasserski ausgebildete Kufe vorgesehen und ein Zugfahrzeug über ein Seil die Zugkraft überträgt. Auch hierbei ist es dann möglich, die Kufen entsprechend dem Fahrvermögen zu wählen.

## Patentansprüche

1. Sportgerät zum einkufigen Gleiten oder Rollen auf unterschiedlichem Untergrund, insbesondere auf abschüssigen Pisten, mit einem stehenden Grundkörper (2), über dessen oberer Schmalseite (12) ein Sitz (4) sowie Haltegriffe (6) angeordnet sind, und dessen untere, bodenseitige Schmalseite (10) eine Kufe (40) aufweist, wobei Maßnahmen vorgesehen sind, um Kufen mit unterschiedlichen Gleit- oder Rolleigenschaften zu verwenden,
**dadurch gekennzeichnet**,
daß die obere Schmalseite (12) des Grundkörpers (2) eine weitere, zu der Kufe (40) der unteren Schmalseite (10) unterschiedlich gestaltete Kufe (42) aufweist.

2. Sportgerät nach Anspruch 1,
**dadurch gekennzeichnet**,
daß die Kufen (40; 42) der unteren (10) und der oberen (12) Schmalseite des Grundkörpers (2) gegeneinander austauschbar sind (Fig. 7, 8 und 12 bis 15).

3. Sportgerät nach Anspruch 1,
**dadurch gekennzeichnet**,
daß der an seiner oberen (12) und unteren (10) Schmalseite mit unterschiedlichen Kufen (40; 42) versehene Grundkörper (2) als Wendekörper ausgebildet ist (Fig. 2 bis 6, 9 bis 11, 14 und 15).

4. Sportgerät nach Anspruch 3,
**dadurch gekennzeichnet**,
daß der Grundkörper (2) in Längsrichtung von einem U-förmigen Bügel (16) übergriffen wird, der den Sitz (4) mit den Haltegriffen (6) trägt und in dem der Grundkörper (2) um eine horizontale Längsachse (30) schwenkbar und in vertikaler Ausrichtung durch eine Arretiervorrichtung (32, 36; 34, 38) gehalten ist (Fig. 2 bis 4).

5. Sportgerät nach einem der Ansprüche 1 bis 4,
**dadurch gekennzeichnet**,
daß der Grundkörper (2) zumindest an einer Schmalseite (10; 12) mit Längsnuten (52) für die formschlüssige Aufnahme von Befestigungsleisten (41; 43) der Kufen (40; 42) ausgestattet ist (Fig. 8 und 12 bis 15).

6. Sportgerät nach Anspruch 5,
**dadurch gekennzeichnet**,
daß die Längsnuten (52) und die Befestigungsleisten (41; 43) zur formschlüssigen Verbindung der Kufen (40; 42) mit dem Grundkörper (2) im Querschnitt schwalbenschwanzförmig ausgebildet sind (Fig. 8, 12 und 15).

7. Sportgerät nach einem der Ansprüche 1 bis 6,
**dadurch gekennzeichnet**,
daß wenigstens eine Kufe (40; 42) als Gleitkufe ausgebildet ist.

8. Sportgerät nach Anspruch 7,
**dadurch gekennzeichnet**,
daß die Seitenkanten (142) der als Gleitkufe ausgebildeten Kufe (42) zum Heck des Sportgerätes hin aufeinander zulaufen (Fig. 4).

9. Sportgerät nach einem der Ansprüche 1 bis 6,
**dadurch gekennzeichnet**,
daß wenigstens eine Kufe (40) eine Rollenanordnung (72) aufweist (Fig. 14 und 15).

10. Sportgerät nach einem der Ansprüche 1 bis 6,
**dadurch gekennzeichnet**,
daß wenigstens eine Kufe als Wasserski ausgebildet ist.

11. Sportgerät nach einem der Ansprüche 1 bis 10,
**dadurch gekennzeichnet**,
daß der Sitz (4) lösbar mit dem Grundkörper (2) oder dem den Grundkörper (2) in Längsrichtung übergreifenden U-förmigen Bügel (16) verbunden ist.

12. Sportgerät nach Anspruch 11,
**dadurch gekennzeichnet**,
daß der Sitz (4) in Längsrichtung des Grundkörpers (2) versetzbar ist.

13. Sportgerät nach Anspruch 11 oder 12,
**dadurch gekennzeichnet**,
daß der Sitz (4) den Grundkörper (2) mit seitlichen Wangen (58) rittlings übergreift und mittels senkrecht zur Ebene des Grundkörpers (2) stehender Schrauben (60) befestigt ist (Fig. 10 und 11).

14. Sportgerät nach Anspruch 11 oder 12,
**dadurch gekennzeichnet**,
daß der Sitz (4) mit dem Grundkörper (2) über eine Steckverbindung gekoppelt ist (Fig. 5 und 6).

15. Sportgerät nach Anspruch 14,
**dadurch gekennzeichnet**,
daß die Steckverbindung über einen U-förmigen Bügel (44) erfolgt, der mit seinem einen Schenkel am Sitz (4) befestigt und mit seinem anderen Schenkel (46) von der Rückseite des Sportgerätes in eine Ausnehmung (48) in der vertikalen Schmalseite (50) des Grundkörpers (2) einschiebbar ist (Fig. 5 und 6).

16. Sportgerät nach Anspruch 15,
**dadurch gekennzeichnet**,
daß der U-förmige Bügel (44) federnd ausgebildet ist und vorzugsweise aus Metall besteht (Fig. 6).

17. Sportgerät nach einem der Ansprüche 1 bis 16,
**dadurch gekennzeichnet**,
daß die Kufen (40; 42) durch die obere und/oder untere Schmalseite (10; 12) des Grundkörpers (2) selbst gebildet werden (Fig. 5 und 13).

18. Sportgerät nach einem der Ansprüche 1 bis 17,
**dadurch gekennzeichnet**,
daß auf die Kufen (40) zumindest einer Schmalseite (10) des Grundkörpers (2) wenigstens eine weitere Kufe (54) mit unterschiedlichen Gleit- oder Rolleigenschaften setzbar ist (Fig. 9 und 12).

19. Sportgerät nach Anspruch 18,
**dadurch gekennzeichnet**,
daß die weitere Kufe (54) nach der Art eines Überzug-Schuhs über die Schmalseite (10) des Grundkörpers (2) schiebbar ist (Fig. 9).

20. Sportgerät nach einem der Ansprüche 1 bis 19,
**dadurch gekennzeichnet**,
daß die Länge des Sportgerätes zwischen 700 und 900 mm beträgt.

21. Sportgerät nach einem der Ansprüche 1 bis 20,
**dadurch gekennzeichnet**,
daß der Sitz (4) derart am Sportgerät angebracht ist, daß die Sitzfläche (70) zum Heck des Gerätes leicht abfällt (Fig. 13).

22. Sportgerät nach einem der Ansprüche 1 bis 21,
**dadurch gekennzeichnet**,
daß im Grundkörper (2) ein Stauraum (74) ausgebildet ist (Fig. 13 und 14).

## Claims

1. Item of sports equipment for sliding or rolling on one runner over a variety of surfaces, in particular along downhill circuits, having an upright basic structure (2), over the upper narrow side (12) of which a seat (4) and handles (6) are positioned, and the lower, ground-facing narrow side of which (10) features a runner (40), measures being envisaged for the use of runners having a variety of sliding or rolling characteristics,
**characterized by the fact** that the upper narrow side (12) of the basic structure (2) features an additional runner (42) which is different in form to the runner (40) along the lower narrow side (10).

2. Item of sports equipment pursuant to Claim 1,
**characterized by the fact** that the runners (40; 42) of the lower (10) and upper (12) narrow sides of the basic structure (2) are mutually interchangeable (Figures 7, 8 and 12 to 15).

3. Item of sports equipment pursuant to Claim 1,
**characterized by the fact** that the basic structure (2), which is fitted along its upper (12) and lower (10) narrow sides with different runners (40; 42), is fashioned as a revolving structure (Figures 2 to 6, 9 to 11, 14 and 15).

4. Item of sports equipment pursuant to Claim 3,
**characterized by the fact** that the basic structure (2) is spanned lengthwise by a u-shaped bow frame (16) which bears the seat (4) with the handles (6), and in which the basic structure (2) can swivel around a horizontal longitudinal axis (30) and is held in a vertical position by a blocking mechanism (32, 36; 34, 38) (Figures 2 to 4).

5. Item of sports equipment pursuant to one of the Claims 1 to 4,
**characterized by the fact** that the basic structure (2) is fitted on at least one narrow side (10; 12) with longitudinal slots (52) for the close-fitting accommodation of fastening strips (41; 43) for the runners (40; 42) (Figures 8 and 12 to 15).

6. Item of sports equipment pursuant to Claim 5,
**characterized by the fact** that the longitudinal slots (52) and the fastening strips (41; 43) for the close-fitting connection of the runners (40; 42) to the basic structure (2) have in cross-section a dovetail form (Figures 8, 12 and 15).

7. Item of sports equipment pursuant to one of the Claims 1 to 6,
**characterized by the fact** that at least one runner (40; 42) has the form of a slide runner.

8. Item of sports equipment pursuant to Claim 7,
**characterized by the fact** that the lateral edges (142) of the runner taking the form of a slide runner (42) converge at the rear of the item of sports equipment (Figure 4).

9. Item of sports equipment pursuant to one of the Claims 1 to 6,
**characterized by the fact** that at least one runner (40) features a roller arrangement (72) (Figures 14 and 15).

10. Item of sports equipment pursuant to one of the Claims 1 to 6,
**characterized by the fact** that at least one runner is fashioned as a water ski.

11. Item of sports equipment pursuant to one of the Claims 1 to 10,
**characterized by the fact** that the seat (4) is attached to, and is detachable from, the basic structure (2) or the u-shaped bow frame (16) extending lengthwise over the basic structure (2).

12. Item of sports equipment pursuant to Claim 11,
**characterized by the fact** that the seat (4) can be moved along the length of the basic structure (2).

13. Item of sports equipment pursuant to Claims 11 or 12,
**characterized by the fact** that the seat (4) arches astride the basic structure (2) with lateral flanges (58) and is fastened by means of screws (60) positioned vertically to the plane of the basic structure (2) (Figures 10 and 11).

14. Item of sports equipment pursuant to Claims 11 or 12,
**characterized by the fact** that the seat (4) is attached to the basic structure (2) by means of a connecting socket (Figures 5 and 6).

15. Item of sports equipment pursuant to Claim 14,
**characterized by the fact** that the connecting socket is effected by means of a u-shaped bow frame (44), which is attached by one of its legs to the seat (4) and with its other leg (46) can be inserted from the back side of the sports equipment into a recess (48) on the vertical narrow side (50) of the basic structure (2) (Figures 5 and 6).

16. Item of sports equipment pursuant to Claim 15,
**characterized by the fact** that the u-shaped bow frame (44) is in a sprung form and is preferably metallic (Figure 6).

17. Item of sports equipment pursuant to one of the Claims 1 to 16,
**characterized by the fact** that the runners (40; 42) consist of the upper and/or lower narrow side (10; 12) of the basic structure itself (Figures 5 and 13).

18. Item of sports equipment pursuant to one of the Claims 1 to 17,
**characterized by the fact** that at least one additional runner (54) with variable sliding or rolling characteristics can be placed on the runners (40) of at least one narrow side (10) of the basic structure (2) (Figures 9 and 12).

19. Item of sports equipment pursuant to Claim 18,
**characterized by the fact** that the additional runner (54) can be pushed over the narrow side (10) of the basic structure (2) in the manner of a covering shoe (Figure 9).

20. Item of sports equipment pursuant to one of the Claims 1 to 19,
**characterized by the fact** that the length of the item of sports equipment is between 700 mm and 900 mm.

21. Item of sports equipment pursuant to one of the Claims 1 to 20,
**characterized by the fact** that the seat (4) is fastened to the item of sports equipment in such a way that the seating area (70) easily drops back to the rear of the equipment (Figure 13).

22. Item of sports equipment pursuant to one of the Claims 1 to 21,
**characterized by the fact** that the basic structure (2) features a storage area (74) (Figures 13 and 14).

## Revendications

1. Engin sportif pour glisser ou rouler au moyen d'un patin unique/central sur différentes surfaces, notamment sur des pistes en pente, avec un corps de base en position debout (2), à petit côté supérieur (12) et au-dessus duquel sont disposés un siège (4) ainsi que des poignées-barres (6) et dont le petit côté inférieur, du côté sol (10), dispose d'un patin (40), alors que des dispositions sont prises pour utiliser des patins disposant d'autres propriétés de glisse et de roulage.
**caractérisé en ce que**
le petit côté (12) du corps de base (2) dispose d'un autre patin (42) configuré de manière différente de celle du patin (40) du petit côté inférieur.

2. Engin sportif d'après la revendication 1
**caractérisé en ce que**
les patins (40, 42) du petit côté inférieur (10) et du petit côté supérieur (12) du corps de base (2) sont interchangeables mutuellement (Fig. 7, 8 et 12 à 15)

3. Engin sportif d'après la revendication 1
**caractérisé en ce que**
le corps de base (2) équipé à son petit côté supérieur (12) et à son petit côté inférieur (10) de patins différents est configuré comme un corps réversible (Fig. 2 à 6, 9 à 11, 14 et 15)

4. Engin sportif d'après la revendication 3
**caractérisé en ce que**
le corps de base (2) est, dans le sens longitudinal, chevauché par une fourchette en forme d'U (16) qui porte le siège (4) avec les poignées-barres (6) et dans laquelle le corps de base (2) peut pivoter autour d'un axe horizontal (30) et est maintenu au moyen d'un dispositif d'arrêt (32, 36; 34, 38), en orientation verticale (Fig. 2 à 4).

5. Engin sportif d'après la revendication de 1 à 4
**caractérisé en ce que**
le corps de base (2) est équipé au moins sur un des petits côtés (10, 12) de rainures longitudinales (52) destinées au logement bloqué de barres de fixation (41; 43) des patins (40; 42) (Fig. 8 et 12 à 15)

6. Engin sportif d'après la revendication 5
**caractérisé en ce que**
les rainures longitudinales (52) et les barres de fixation (41; 43) destinées à la liaison bloquée des patins (40; 42) avec le corps de base (2) sont, en leur section, configurées en forme de queue d'aronde (Fig. 8, 12 et 15)

7. Engin sportif d'après la revendication de 1 à 6
**caractérisé en ce que**
au moins un des patins (40; 42) est configuré comme patin de glisse/ski.

8. Engin sportif d'après la revendication 7
**caractérisé en ce que**
les arêtes latérales (142) du patin configuré comme patin de glisse (42) convergent l'une vers l'autre en direction de l'arrière de l'engin sportif (Fig. 4)

9. Engin sportif d'après la revendication de 1 à 6
**caractérisé en ce que**
au moins un des patins (40) dispose d'un dispositif de rouleaux (72) (Fig. 14 et 15)

10. Engin sportif d'après la revendication de 1 à 6
**caractérisé en ce que**
au moins un des patins est configuré comme ski nautique

11. Engin sportif d'après la revendication de 1 à 10
**caractérisé en ce que**
le siège (4) est lié, de manière démontable' au corps de base (2) ou à la fourchette en forme d'U (16) chevauchant le corps de base (2) dans le sens longitudinal.

12. Engin sportif d'après la revendication 11
**caractérisé en ce que**
Le siège (4) peut être déplacé en sens longitudinal du corps de base (2).

13. Engin sportif d'après la revendication 11 ou 12
**caractérisé en ce que**
Le siège (4) chevauche sur le corps de base (2) à califourchon au moyen de faces latérales et est fixé au moyen de vis (60) positionné es à la verticale par rapport au niveau du corps de base (2) (Fig. 10 et 11).

14. Engin sportif d'après la revendication 11 ou 12
**caractérisé en ce que**
Le siège (4) es accouplé au corps de base (2) via une emboîture (Fig. 5 et 6).

15. Engin sportif d'après la revendication 14
**caractérisé en ce que**
L'emboîture se fait via une fourchette en forme d'U (44) fixée avec une de ses jambes au siège (4) et dont l'autre jambe (45) peut être glissée à partir du côté arrière de l'engin sportif dans un creux (48) dans le petit côté vertical (50) du corps de base (2) (Fig. 5 et 6).

16. Engin sportif d'après la revendication 15
**caractérisé en ce que**
la fourchette en forme d'U (44) est configurée de manière élastique et est de préférence réalisée en métal (Fig. 6).

17. Engin sportif d'après un des revendications de 1 à 16
**caractérisé en ce que**
les patins (40, 42) sont formés par le petit côté supérieur et/ou le petit côté inférieur (10; 12) mêmes du corps de base (Fig. 5 et 13)

18. Engin sportif d'après un des revendications de 1 à 17
**caractérisé en ce que**
au moins un patin supplémentaire (54) ayant d'autres propriétés de glisse et de roulage peut être installé sur les patins (40) d'au moins un des petits côtés (Fig. 9 et 12).

19. Engin sportif d'après la revendication 18
**caractérisé en ce que**
le patin supplémentaire (54) peut être glissé à la manière d'une chaussure de recouvrement au-dessus du petit côté (10) du corps de base (Fig. 9).

20. Engin sportif d'après un des revendications de 1 à 19
**caractérisé en ce que**
la longueur de l'engin sportif est comprises entre 700 et 900 mm.

21. Engin sportif d'après un des revendications de 1 à 20
**caractérisé en ce que**
le siège (4) est monté sur l'engin sportif de manière à ce que la surface de siège (70) est légèrement inclinée vers le bas, à l'arrière de l'engin (Fig. 13)

22. Engin sportif d'après un des revendications de 1 à 21
**caractérisé en ce que**
un espace de rangement (74) est configuré dans le corps de base (2) (Fig. 13 et 14).
